# EUROPEAN PATENT APPLICATION

(11) **EP 4 755 230 A1**
(43) Date of publication of application: **10.06.2026**
(21) Application number: 24849469.2
(22) Date of filing: 24.07.2024
(51) Int. Cl.: A24F 40/90, A24F 40/50, A24F 40/46, H02J 7/00, A24F 40/57

(54) **AEROSOL GENERATION DEVICE AND OPERATION METHOD THEREFOR**

(30) Priority: 31.07.2023 KR 20230099866; 10.11.2023 KR 20230155655
(71) Applicant: KT&G Corporation, Daedeok-gu Daejeon 34337 (KR)
(72) Inventor: PARK, Ju Eon, Seongnam-si, Gyeonggi-do 13597 (KR); KIM, Tae Hun, Yongin-si, Gyeonggi-do 16925 (KR); SHIN, Youn Ji, Seoul 05022 (KR); LIM, Hun Il, Seoul 05555 (KR); JUNG, Hyung Jin, Seoul 06993 (KR)
(74) Representative: AWA Sweden AB
(86) International application number: PCT/KR2024/010761
(87) International publication number: WO 2025/028900

(57) **Abstract**

An aerosol generating device according to an embodiment includes a removable battery in a battery accommodation portion, a battery monitoring unit configured to measure operation data of the battery, and a control unit including an operation mode setting unit configured to determine whether to balance the battery based on the operation data.

## Description

### Technical Field

The disclosure relates to an aerosol generating device and an operating method therefor. Particularly, the disclosure relates to an aerosol generating device including a removable battery capable of being charged in two charging modes and an operating method therefor.

### Background Art

Recently, there has been an increasing demand for an alternative smoking method of general cigarettes. For example, there has been an increasing demand for a method of generating an aerosol by heating an aerosol generating article inside a cigarette, other than a method of generating an aerosol by burning the cigarette. Accordingly, research on heating type cigarettes or heating type aerosol generating devices is actively underway.

Aerosol generating devices may receive power from a battery for overall operations of the device and heating of a heater. Recently, countries have tended to demand eco-friendliness and stability throughout the entire life cycles of electronic devices including batteries from battery production to recycling, to improve the global environment.

### Disclosure of Invention

### Technical Problem

The present disclosure provides an aerosol generating device capable of balancing between batteries charged in two charging modes and an operating method therefor.

The problems to be solved through the embodiments are not limited to the above-described problems, and the problems not mentioned may be clearly understood by one of ordinary skill in the art to which the embodiments belong from the present specification and the accompanying drawings.

### Solution to Problem

An aerosol generating device according to an embodiment includes a removable battery in a battery accommodation portion, a battery monitoring unit configured to measure operation data of the battery, and a control unit including an operation mode setting unit configured to determine whether to balance the battery based on the operation data.

An operating method of an aerosol generating device according to an embodiment includes measuring operation data of a battery mounted on a battery accommodation portion, and determining whether to balance the battery based on the operation data.

### Advantageous Effects of Invention

The aerosol generating device and the operating method therefor according to various embodiments of the present disclosure may increase a battery life and maintain battery performance by preventing degradation of the battery through balancing between batteries charged in two charging modes.

The effects of the embodiments are not limited to the above-described effects, and the effects not mentioned may be clearly understood by one of ordinary skill in the art to which the embodiments belong from the present specification and the accompanying drawings.

### Brief Description of Drawings

FIG. 1 is a block diagram illustrating a hardware configuration of an aerosol generating device according to an embodiment.
FIGS. 2A to 2E are diagrams illustrating embodiments of the aerosol generating device of FIG. 1 implemented in various types.
FIG. 3 is a diagram for explaining a process of charging a removable battery in a first charging mode.
FIG. 4 is a diagram for explaining a process of charging a removable battery in a second charging mode and a process of self-discharging the removable battery.
FIG. 5 is a diagram for explaining an operation of a power management unit according to an embodiment.
FIG. 6 is a diagram for explaining an operation of an operation mode setting unit according to an embodiment.
FIG. 7 is a diagram for explaining a balancing mode according to an embodiment.
FIG. 8 is a flowchart illustrating an operating method of an aerosol generating device according to an embodiment.

### Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

Hereinafter, the present disclosure will now be described more fully with reference to the accompanying drawings, in which exemplary embodiments of the present disclosure are shown such that one of ordinary skill in the art may easily work the present disclosure. The disclosure can, however, be embodied in many different forms and should not be construed as being limited to the embodiments set forth herein.

Hereinafter, embodiments of the present disclosure will be described in detail with reference to the drawings.

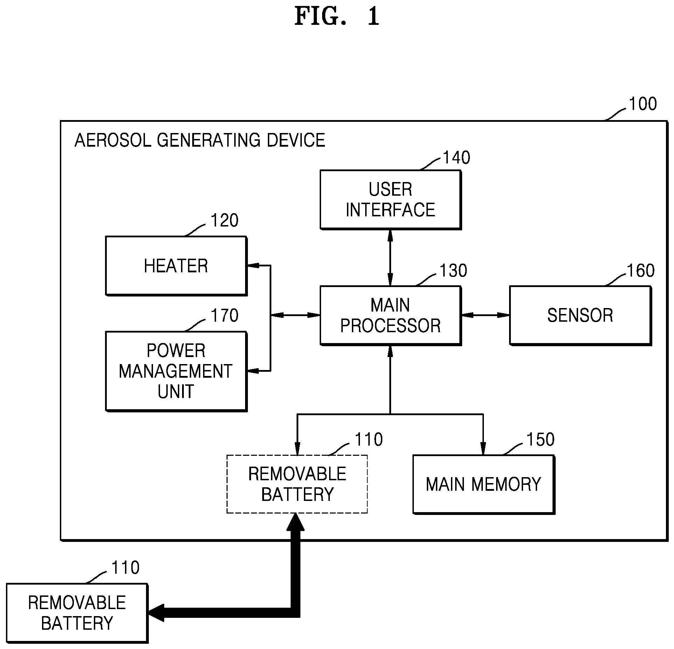

FIG. 1 is a block diagram illustrating a hardware configuration of an aerosol generating device according to an embodiment.

Referring to FIG. 1, an aerosol generating device 100 may include a removable battery 110, a heater 120, a main processor 130, a user interface 140, a main memory 150, a sensor 160, and a power management unit 170. However, hardware components inside the aerosol generating device 100 are not limited to those illustrated in FIG. 1. It may be understood by one of ordinary skill in the technical field related to the present embodiment that some of the hardware configurations shown in FIG. 1 may be omitted or new configurations (e.g., a connecting port, another communication module, etc.) may be further added according to the design of the aerosol generating device 100.

Hereinafter, an operation of each of the components included in the aerosol generating device 100 will be described without limiting a space in which each of the components is located.

The removable battery 110 supplies power used to operate the aerosol generating device 100. For example, the removable battery 110 may supply power so that the heater 120 may be heated. In addition, the removable battery 110 may supply power necessary for the operations of the other hardware components included in the aerosol generating device 100, that is, the heater 120, the main processor 130, the user interface 140, the main memory 150, the sensor 160, or the battery management unit 170. The removable battery 110 may be, for example, a lithium polymer (LiPoly) battery or a lithium ion battery, but is not limited thereto.

The removable battery 110 is a replaceable type power source, and may be mounted on a battery accommodation portion provided in the aerosol generating device 100 or may be removed from the battery accommodation portion. When an electrical contact portion is provided in the removable battery 110, and the removable battery 110 is mounted on the aerosol generating device 100, the electrical contact portion of the removable battery 110 may be electrically connected to an electrical contact portion provided in the aerosol generating device 100 and implemented to supply power to the aerosol generating device 100. As another example, a charging coil supplying power to the aerosol generating device 100 in a wireless charging method may be provided in the removable battery 110, instead of a separate electrical contact portion. That is, the power supply method of the removable battery 110 may vary, and the electrical connection method between the removable battery 110 and the aerosol generating device 100 may be different according to the power supply method supported by the removable battery 110.

The removable battery 110 may include a charger interface that may be connected to an external charger. Power for charging the removable battery 110 through the charger interface may be provided to the removable battery 110. The removable battery 110 may be charged by the external charger while being coupled to the aerosol generating device 100 (or in a first charging mode) or being uninstalled from the aerosol generating device 100 (or in a second charging mode).

The removable battery 110 according to an embodiment may include at least one battery cell. The battery cell may have different electrodes formed at both ends in a longitudinal direction, and may be formed in a cylindrical shape. However, the shape of the battery cell is not limited thereto. For example, the battery cell may be formed in a prismatic type or a pouch type.

The heater 120 receives power from the removable battery 110 by the control of the main processor 130. The heater 120 may heat a cigarette inserted into the aerosol generating device 100 or heat a cartridge mounted on the aerosol generating device 100 by using the power supplied from the removable battery 110. That is, the heater 120 may generate an aerosol by heating an aerosol generating material provided in the cigarette or the cartridge.

The heater 120 may be located in a body of the aerosol generating device 100. Alternatively, when the aerosol generating device 100 includes the body and the cartridge, the heater 120 may be located in the cartridge. When the heater 120 is located in the cartridge, the heater 120 may receive power from the removable battery 110 located in the body.

The heater 120 may be implemented as an electrical resistance heating type heater including an electrical resistance material. For example, the electrical resistance material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, etc., but is not limited thereto. The heater 120 may be implemented as a metal wire, a metal plate on which an electrically conductive track is disposed, a ceramic heating element, etc., but is not limited thereto.

The heater 120 may be implemented as an induction heating type heater. The heater 120 may correspond to a heater assembly implemented as a set of an electrically conductive coil and a susceptor for heating the cigarette or the cartridge by induction heating.

The heater 120 may heat the cigarette inserted into the accommodation space provided in the aerosol generating device 100. As the cigarette is accommodated in the accommodation space of the aerosol generating device 100, the heater 120 may be located inside and/or outside the cigarette. Accordingly, the heater 120 may generate the aerosol by heating the aerosol generating material in the cigarette.

Meanwhile, the heater 120 may be implemented as a coil heater provided only in the cartridge. The cartridge may include a coil heater, a liquid transfer element, and a liquid storage to transfer an aerosol generating material accommodated in the liquid storage through the liquid transfer element, and the coil heater may generate an aerosol by heating the aerosol generating material absorbed in the liquid transfer element. For example, when the heater 120 is the coil heater, the heater 120 may include a material such as nickel chromium and be wound around the liquid transfer element or disposed adjacent to the liquid transfer element.

The main processor 130 is hardware that controls the overall operations of the aerosol generating device 100. The main processor 130 may include at least one processing unit, such as a micro controller unit (MCU). The main processor 130 may be implemented as an array of a plurality of logic gates, or may be implemented as a combination of a general-purpose microprocessor and a memory in which a program executable in the microprocessor is stored. In addition, it may be understood by one of ordinary skill in the technical field to which the present embodiment belongs that the main processor 130 may be implemented as other types of hardware.

The main processor 130 may analyze a sensing result obtained by the sensor 160 and control subsequent processes to be performed based on the sensing result. For example, the main processor 130 may control the power supplied to the heater 120 so that the operation of the heater 120 starts or ends based on the sensing result obtained by the sensor 160. In addition, the main processor 130 may control the amount of power supplied to the heater 120 and the time when the power is supplied so that the heater 120 may be heated to a certain temperature or maintained at an appropriate temperature based on the sensing result obtained by the sensor 160.

The main processor 130 may control the operation of the heater 120 based on a previously stored temperature profile. In addition, the main processor 130 may control the temperature of the heater 120 after sensing a puff of the user by using a puff sensor in the sensor 160. In addition, the main processor 130 may count the number of puffs by using the puff sensor and then stop supplying power to the heater 120 when the number of puffs reaches a preset number.

The main processor 130 may control the user interface 140 based on the sensing result. For example, when the number of puffs reaches the preset number after counting the number of puffs by using the puff sensor, the main processor 130 may use a lamp, a motor, or a speaker to notify the user that the aerosol generating device 100 will soon end.

Meanwhile, the main processor 130 may determine a heating mode of the heater 120 based on the number of battery cells included in the removable battery 110 and the connection method between the battery cells.

The user interface 140 may provide information about the state of the aerosol generating device 100 to the user. The user interface 140 may include various interfacing elements such as a display or a lamp that outputs visual information (UI screen), a motor that outputs tactile information, a speaker that outputs sound information, input/output (I/O) interfacing elements (e.g., a button or a touch screen) that receive information input from the user or output information to the user, and terminals for receiving charging power.

The main memory 150 is hardware that stores various types of data processed in the aerosol generating device 100, and may store data processed and data to be processed by the main processor 130. The main memory 150 may be implemented in various types such as random access memory (RAM), such as dynamic random access memory (DRAM) and static random access memory (SRAM), read-only memory (ROM), and electrically erasable programmable read-only memory (EEPROM).

Various types of information such as the operation time of the aerosol generating device 100, the maximum number of puffs, a temperature profile, smoking information of the user, information for battery authentication, etc. may be stored in the main memory 150.

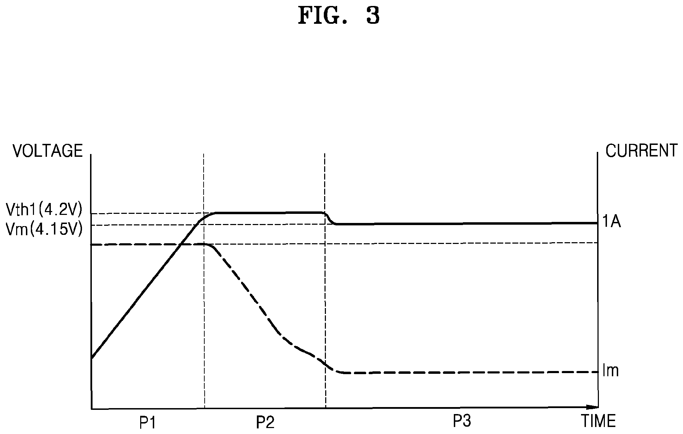

The power management unit 170 may balance a voltage deviation of the removable battery 110 charged in a plurality of charging modes (e.g., the first charging mode or the second charging mode) by the control of the main processor 130. This will be described in more detail with reference to FIGS. 3 to 8 below.

Meanwhile, although not shown in FIG. 1, the aerosol generating device 100 may configure an aerosol generating system together with a separate cradle. For example, the cradle may be used to charge the removable battery 110 of the aerosol generating device 100 while storing the aerosol generating device 100. That is, while the aerosol generating device 100 of the cradle is accommodated in an accommodation space inside the cradle, the cradle may be a dedicated device only for the aerosol generating device 100 to receive power from a battery of the cradle and charge the removable battery 110 of the aerosol generating device 100.

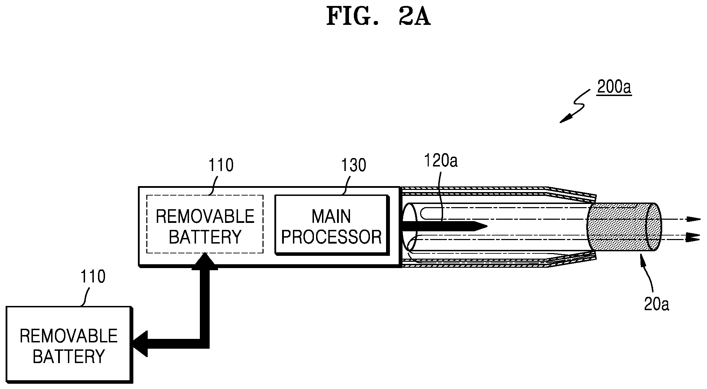

FIGS. 2A through 2E are diagrams illustrating embodiments of the aerosol generating device of FIG. 1, which is implemented in various types. Referring to FIGS. 2A through 2E, the aerosol generating device 100 may be implemented as various types of aerosol generating devices 200a through 200e using an electrically resistive heating method or an induction heating method, a method that additionally includes a vaporizer, a cartridge method, or the like. FIGS. 2A through 2E only show some elements to describe the types of aerosol generating devices 200a through 200e, and other general elements may be further included in the aerosol generating devices 200a through 200e in addition to the elements shown in FIGS. 2A through 2E.

In FIGS. 2A through 2E, the removable battery 110, heaters 120a through 120e, and the main processor 130 are components respectively corresponding to the removable battery 110, the heater 120, and the main processor 130 of FIG. 1, which may perform functions of the removable battery 110, the heater 120, and the main processor 130 described above in FIG. 1.

FIG. 2A is a diagram to describe an aerosol generating device 200a in an electrically resistive method, according to an embodiment. The aerosol generating device 200a may be a type of the aerosol generating device 100.

Referring to FIG. 2A, the aerosol generating device 200a may include the removable battery 110, a heater 120a, and the main processor 130.

A cigarette 20a may be inserted into an accommodation space inside the aerosol generating device 200a. When the cigarette 20a is inserted into the aerosol generating device 200a, the aerosol generating device 200a may generate aerosols from the cigarette 20a by heating the cigarette 20a by using the heater 120a. Because the generated aerosols are delivered to the user by passing through the cigarette 20a, the user may smoke the cigarette 20a.

The heater 120a may be heated by power supplied from the removable battery 110. The heater 120a may be an electrically resistive heater. For example, the heater 120a may include an electrically conductive track, and the heater 120a may be heated when currents flow through the electrically conductive track.

The electrically conductive track of the heater 120a may be made of an electrically resistive material and a heating temperature thereof may be determined according to power consumption of resistance, and a resistance value of the electrically conductive track may be set based on the power consumption of resistance of the electrically conductive track. The resistance value of the electrically conductive track may be variously set according to a configuring material, length, width, thickness, pattern, or the like of the electrically resistive material.

The electrically conductive track may have an internal resistance level that increases as temperature increases, according to a resistance temperature coefficient characteristic. For example, in a certain temperature range, the temperature of the electrically conductive track and the size of resistance may be proportional. By using such a principle, the heater 120a made of the electrically conductive track may heat the cigarette 20a in the electrically resistive method.

The electrically conductive track may be made of tungsten, gold, platinum, silver copper, nickel palladium, or a combination thereof. Also, the electrically conductive track pattern may be doped with a suitable dopant and may include an alloy.

The shape of the heater 120a may be manufactured in various ways, such as a tube shape, a plate shape, a needle shape, a rod shape, or the like. In addition, the heater 120a may be arranged with a plurality of heaters. The heater 120a may be used in an internal heating method of heating the inside of the cigarette 20a by being inserted into the interior of the cigarette 20a.

The removable battery 110 may be separated from or mounted in the aerosol generating device 200a. When the removable battery 110 is mounted in the aerosol generating device 200a, power may be supplied to the heater 120a from the removable battery 110 to control the temperature of the electrically conductive track to perform a heating operation of the heater 120a.

The main processor 130 may control the heating operation of the heater 120a by controlling the power supplied to the heater 120a. For example, the main processor 130 may control a temperature at which the cigarette 20a is heated by the heater 120a, according to a temperature profile.

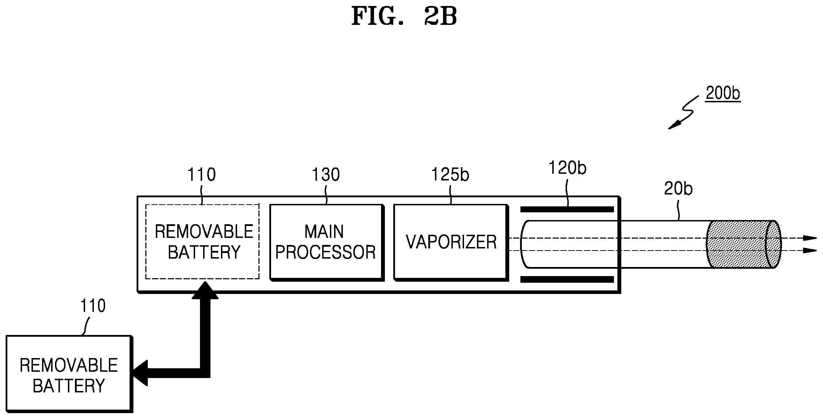

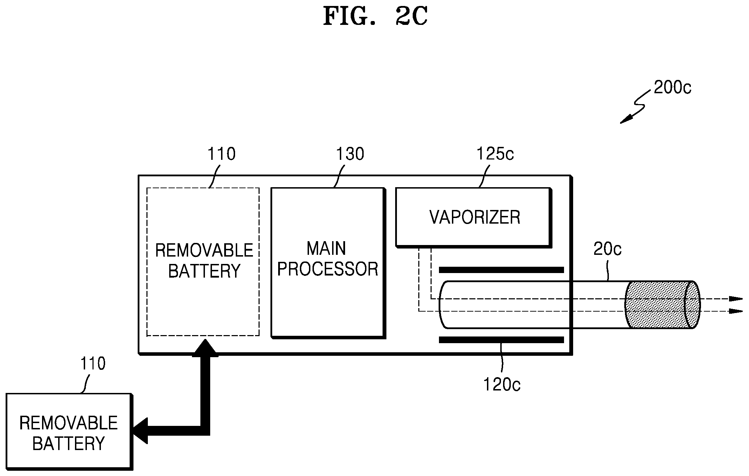

FIGS. 2B and 2C are diagrams to describe aerosol generating devices 200b and 200c additionally including vaporizers 125b and 125c, respectively, according to embodiments. Each of the aerosol generating devices 200b and 200c may be a type of the aerosol generating device 100.

Referring to FIGS. 2B and 2C, the aerosol generating devices 200b and 200c further include the vaporizers 125b and 125c, respectively. Cigarettes 20b and 20c may be inserted into inner spaces of the aerosol generating devices 200b and 200c, respectively.

FIG. 2B illustrates that the vaporizer 125b and a heater 120b are arranged in a row. However, FIG. 2C illustrates that the vaporizer 125c and a heater 120c are arranged in parallel. That is, the aerosol generating devices 200b and 200c may be distinguished depending on a way the vaporizer 125b is arranged.

The heaters 120b and 120c may be heated by power supplied from the removable battery 110. The heaters 120b and 120c are electrically resistive heaters and may include, for example, electrically conductive tracks.

Unlike the heater 120a described with reference to FIG. 2A, the heaters 120b and 120c in FIGS. 2B and 2C may be implemented in an external heating method of heating outer surfaces of the cigarettes 20b and 20c by being arranged on outer peripheries of the cigarettes 20b and 20c.

The vaporizers 125b and 125c may generate aerosols by heating a liquid composition, and the generated aerosols may pass through the cigarettes 20b and 20c to be delivered to the user. In other words, the aerosols generated by the vaporizers 125b and 125c may be transported along an air flow passage of the aerosol generating devices 200b and 200c, and the air flow passage may be configured so that the aerosols generated by the vaporizers 125b and 125c pass through the cigarettes 20b and 20c to be delivered to the user.

The vaporizers 125b and 125c may include a liquid storage unit, a liquid delivery element, and a heating element (or a vaporizing element). However, each of the liquid storage unit, the liquid delivery element, and the heating element is an independent module, which may also be arranged in other locations within the aerosol generating device 100 instead of within the vaporizers 125b and 125c.

The liquid storage unit may store a liquid composition. For example, the liquid composition may be a liquid including a tobacco-containing material having a volatile tobacco flavor component, or a liquid including a non-tobacco material. The liquid storage unit may be formed to be detached/attached from/to the vaporizers 125b and 125c or may be formed integrally with the vaporizers 125b and 125c. For example, the liquid composition may include water, a solvent, ethanol, plant extract, spices, flavorings, or a vitamin mixture. Also, the liquid composition may include an aerosol forming agent, such as glycerin and propylene glycol.

The liquid delivery element may deliver the liquid composition of the liquid storage unit to the heating element. For example, the liquid delivery element may be a wick such as cotton fiber, ceramic fiber, glass fiber, or porous ceramic, but is not limited thereto.

The heating element provided in the vaporizers 125b and 125c is an element configured to heat (vaporize) the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosols may be generated. Accordingly, the vaporizers 125b and 125c may also be referred to as in other terms such as cartomizers or atomizers.

The removable battery 110 may be separated from or mounted in the aerosol generating devices 200b and 200c. When the removable battery 110 is mounted in the aerosol generating devices 200b and 200c, power may be supplied to the heaters 120b and 120c and the vaporizers 125b and 125c from the removable battery 110 to perform heating operations of the heaters 120b and 120c and the vaporizers 125b and 125c.

The main processor 130 may control the heating operations of the heaters 120b and 120c and the vaporizers 125b and 125c by controlling power supplied to the heaters 120b and 120c and the vaporizers 125b and 125c. For example, the main processor 130 may control temperatures at which the cigarettes 20b and 20c are heated by the heaters 120b and 120c and the vaporizers 125b and 125c, according to temperature profiles.

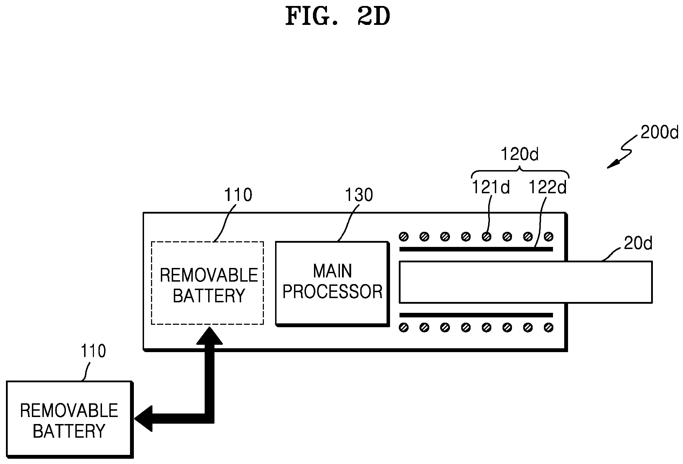

FIG. 2D is a diagram to describe an aerosol generating device 200d in an induction heating method, according to an embodiment. The aerosol generating device 200d may be a type of the aerosol generating device 100.

Referring to FIG. 2D, the aerosol generating device 200d may include a heater 120d including a coil 121d and a susceptor 122d, the removable battery 110, and the main processor 130.

The aerosol generating device 200d may generate aerosols by heating a cigarette 20d accommodated in the aerosol generating device 200d in an induction heating method. The induction heating method may refer to a method of heating a magnetic body by applying an alternating magnetic field, which has a periodically changing direction, to the magnetic body generating heat by an external magnetic field. Accordingly, the aerosol generating device 200d may release thermal energy from the magnetic body by applying the alternating magnetic field to the magnetic body, and may transfer the thermal energy released from the magnetic body to the cigarette 20d, thereby heating the cigarette 20d. Here, the magnetic body generating heating by an external magnetic field may be the susceptor 122d. The susceptor 122d may be provided in the aerosol generating device 200d. Alternatively, the susceptor 122d may also be provided inside the cigarette 20d in the shape of a piece, thin plate, strip, or the like, instead of being provided in the aerosol generating device 200d.

The susceptor 122d may include a ferromagnetic substance. For example, the material of the susceptor 122d may include metal or carbon. The material of the susceptor 122d may include at least one of ferrite, ferromagnetic alloy, stainless steel, and aluminum (Al). Also, the material of the susceptor 122d may include at least one of a ceramic such as graphite or zirconia, a transition metal such as nickel (Ni) or cobalt (Co), and a metalloid such as boron (B) or phosphorus (P).

The aerosol generating device 200d may accommodate the cigarette 20d. A space accommodating the cigarette 20d may be formed in the aerosol generating device 200d. The susceptor 122d may be arranged around the periphery of the space that accommodates the cigarette 20d. For example, the susceptor 122d may have a cylindrical shape surrounding the outside of the cigarette 20d. Accordingly, when the cigarette 20d is accommodated in the aerosol generating device 200d, the cigarette 20d may be accommodated in an accommodation space of the susceptor 122d, and the susceptor 122d may be arranged at a position surrounding at least a portion of an outer surface of the cigarette 20d. However, the shape of the susceptor 122d is not limited thereto and may vary.

As the heater 120d is in an induction heating method, the heater 120d may heat the cigarette 20d accommodated in the aerosol generating device 200d by using the susceptor 122d that generates heat by an external magnetic field generated by the coil 121d.

The coil 121d may be arranged to be wound along the outer surface of the susceptor 122d, so that an alternating magnetic field may be applied to the susceptor 122d. When power is supplied to the coil 121d from the aerosol generating device 200d, a magnetic field may be formed inside the coil 121d. When an alternating current is applied to the coil 121d, a direction of the magnetic field formed inside the coil 121d may be continuously changed. When the susceptor 122d is located inside the coil 121d and is exposed to an alternating magnetic field having a periodically changing direction, the susceptor 122d may generate heat, and a cigarette accommodated in the susceptor 122d may be heated. The shape of the coil 121d may be a cylindrical shape wound along the cigarette 20d, but is not limited thereto, and the coil 121d may also be implemented in various types, such as a flat coil or the like.

The removable battery 110 may be separated from or mounted in the aerosol generating device 200d. When the removable battery 110 is mounted in the aerosol generating device 200d, for example, power may be supplied to the coil 121d to perform a heating operation of the heater 120d.

The main processor 130 may control the heating operation of the heater 120d by controlling the power supplied to the coil 121d. For example, the main processor 130 may control a temperature at which the cigarette 20d is heated by induction heating of the susceptor 122d by adjusting the intensity of a magnetic field induced by the coil 121d according to a temperature profile.

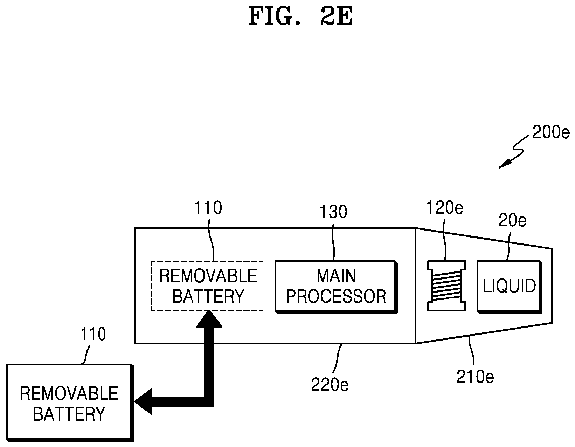

FIG. 2E is a diagram to describe an aerosol generating device 200e including a replaceable cartridge 210e containing an aerosol generating material 20e.

The aerosol generating device 200e of FIG. 2E includes the cartridge 210e containing the aerosol generating material 20e, and a body 220e supporting the cartridge 210e. The aerosol generating device 200e may correspond to a type of the aerosol generating device 100 of FIG. 1. At this time, the hardware components included in the aerosol generating device 100 of FIG. 1 may be dividedly positioned in the body 220e and the cartridge 210e.

The cartridge 210e may be coupled to the body 220e in a state in which the aerosol generating material 20e is accommodated therein. The cartridge 210e may be mounted on the body 220e by inserting a portion of the cartridge 210e into a receptacle of the body 220e.

The cartridge 210e may contain the aerosol generating material 20e of a liquid composition, but is not limited thereto, and may contain the aerosol generating material 20e in any one of a solid state, a gaseous state, or a gel state. For example, the liquid composition may be a liquid including a tobacco-containing material having a volatile tobacco flavor component, or a liquid including a non-tobacco material.

A heater 120e provided in the cartridge 210e performs a heating operation by an electrical signal or wireless signal transmitted from the body 220e. Accordingly, aerosols may be generated by vaporizing the aerosol generating material 20e inside the cartridge 210e by heating of the heater 120e.

The heater 120e may be implemented as a conductive filament or ceramic heating body including a metal material, such as copper, nickel, tungsten, or the like, to heat an aerosol generating material delivered by a liquid delivery element by generating heat through electrical resistance, and may be wound around the liquid delivery element or arranged adjacent to the liquid delivery element.

The removable battery 110 may be separated from or mounted in the aerosol generating device 200e. When the removable battery 110 is mounted in the aerosol generating device 200e, power may be supplied to the heater 120e from the removable battery 110 to perform a heating operation of the heater 120e.

The main processor 130 may control the heating operation of the heater 120e by controlling the power supplied to the heater 120e. For example, the main processor 130 may control a temperature at which the aerosol generating material 20e is heated by the heater 120e, according to a temperature profile.

Although not illustrated in FIGS. 2A through 2E, the aerosol generating devices 200a through 200e and a separate cradle may form together a system. For example, the cradle may store the aerosol generating devices 200a through 200e or perform charging of the removable battery 110 of the aerosol generating devices 200a through 200e.

According to various embodiments, the aerosol generating device 100 of FIG. 1 may be implemented as at least one of the types of the aerosol generating devices 200a through 200e of FIGS. 2A through 2E, but is not necessarily limited thereto, and may be implemented as other types.

The aerosol generating devices 200a through 200e of FIGS. 2A through 2E may commonly use the removable battery 110 as a power source. The removable battery 110 is a battery that may be replaced by mounting in or separating from the aerosol generating devices 200a through 200e.

FIG. 3 is a diagram for explaining a process of charging a removable battery in a first charging mode.

Referring to FIGS. 1 and 3, the removable battery 110 may be charged in a plurality of charging modes. The charging modes of the removable battery 110 may include a first charging mode in which the removable battery 110 is charged while being coupled to a battery accommodation portion of the aerosol generating device 100, and a second charging mode in which the removable battery 110 is separated (or removed) from the battery accommodation portion and charged by an external charger.

With regard to the charging process in the first charging mode shown in FIG. 3, in a first period P1, when charging of the removable battery 110 starts, the current of the removable battery 110 may operate in a constant current mode to maintain a constant current value (e.g., 1 A), and the voltage of the removable battery 110 may gradually increase as charging proceeds. At this time, because the removable battery 110 operates in the constant current mode, the main processor 130 of the aerosol generating device 100 may control the charging process by using current as a reference so as to maintain the constant current value (e.g., 1 A).

In a second period P2, when the voltage of the removable battery 110 rises to reach a preset first threshold voltage value Vₜₕ₁, the main processor 130 of the aerosol generating device 100 may be changed to a constant voltage mode to control the voltage of the removable battery 110 to be maintained at the first threshold voltage value Vₜₕ₁ (e.g., 4.2 V), and the current of the removable battery 110 to gradually decrease as charging proceeds. At this time, the main processor 130 of the aerosol generating device 100 may control the voltage of the removable battery 110 not to exceed the preset first threshold voltage value Vₜₕ₁ through pulse width modulation (PWM) control.

In a third period P3, the main processor 130 of the aerosol generating device 100 may control a micro-holding current Im to be provided to the removable battery 110 so as to maintain a preset holding voltage Vm (e.g., 4.15 V) until the voltage value of the removable battery 110 reaches the first threshold voltage Vₜₕ₁ and then the aerosol generating device 100 is separated from a charging external power source.

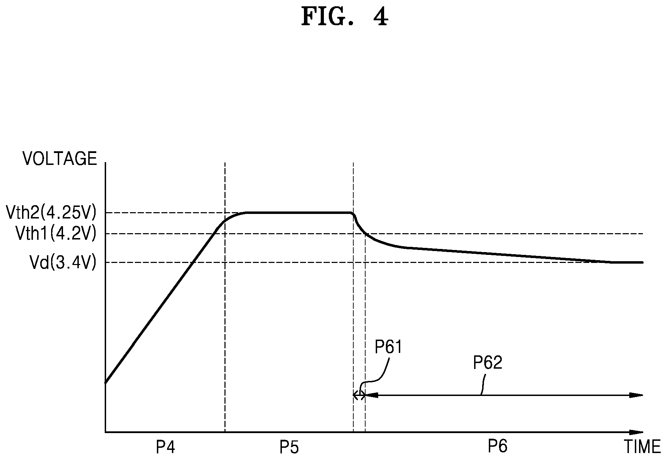

FIG. 4 is a diagram for explaining a process of charging a removable battery in a second charging mode and a process of self-discharging the removable battery.

In this regard, a fourth period P4 and a fifth period P5 of the second charging mode are respectively the same as the first period P1 and the second period P2 of a first charging mode in the other configurations, except that a full charging voltage of the removable battery 110 is a second threshold voltage value Vₜₕ₂ greater than the first threshold voltage value Vₜₕ₁. Meanwhile, a sixth period P6 assumes that the removable battery 110 is separated from an external charger after being fully charged.

With regard to the charging process and the self-discharging process in the second charging mode referring to FIGS. 1, 3, and 4, in the fourth period P4, when charging of the removable battery 110 starts, the current of the removable battery 110 may operate in a constant current mode to maintain a constant current value, and the voltage of the removable battery 110 may gradually increase as charging proceeds. At this time, because the removable battery 110 operates in the constant current mode, the main processor 130 of the aerosol generating device 100 may control the charging process by using current as a reference so as to maintain the constant current value

In the fifth period P5, when the voltage of the removable battery 110 rises to reach the preset second threshold voltage value Vₜₕ₂, the main processor 130 of the aerosol generating device 100 may be changed to a constant voltage mode to control the voltage of the removable battery 110 to be maintained at the second threshold voltage value Vₜₕ₂ (e.g., 4.25 V), and the current of the removable battery 110 to gradually decrease as charging proceeds. At this time, the main processor 130 of the aerosol generating device 100 may control the voltage of the removable battery 110 not to exceed the preset second threshold voltage value Vₜₕ₂ through PWM control.

When the removable battery 110 is removed from the aerosol generating device 100 and charged through a separate external charger (or charged in the second charging mode), a full-charge voltage may be set to the second threshold voltage value Vₜₕ₂ (e.g., 4.25 V) greater than the first threshold voltage value Vₜₕ₁ (e.g., 4.2 V) in preparation for a self-discharge phenomenon in the sixth period P6 to be described below.

In the sixth period P6, the removable battery 110 may be self-discharged. Self-discharge of a battery refers to a phenomenon in which the voltage is gradually discharged even when the battery is left in a no-load state after charging. Self-discharge may occur due to an electrical cause such as an internal short circuit and/or a chemical cause such as generation of impurities in an electrolyte. In general, self-discharge tends to increase as the electrical temperature increases, and increase as the battery ages.

Meanwhile, a self-discharge rate of the removable battery 110 may be the highest immediately after charging, and then more gradual. For example, an end point of a 61^{st} period P61 may be about 24 hours after being separated from an external charger, and may be discharged from a voltage corresponding to the second threshold voltage value Vₜₕ₂ (e.g., 4.25 V) to a voltage corresponding to the first threshold voltage value Vₜₕ₁ (e.g., 4.2 V). In addition, an end point of a 62^{nd} period P62 may be about 30 days after being separated from the external charger, and may be discharged from the voltage corresponding to the first threshold voltage Vₜₕ₁ (e.g., 4.2 V) to a voltage corresponding to a discharge end voltage Vd (e.g., 3.4 V). However, because period lengths and voltage values (e.g., Vₜₕ₁, Vₜₕ₂, and Vd) are only examples for convenience of description, the period lengths and the voltage values may increase or decrease according to the type of the removable battery 110 and the usage environment (e.g., temperature, aging of the battery, etc.)

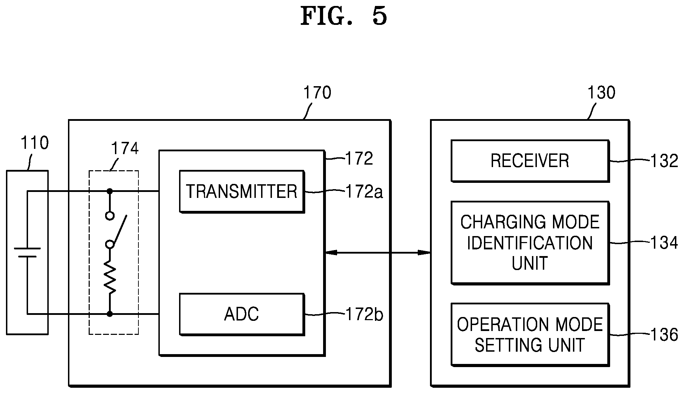

As described above, a voltage difference may occur between the voltage of the battery charged in the first charging mode and the voltage of the battery charged in the second charging mode. In particular, when the aerosol generating device 100 operates using an overcharged voltage, such as in the 61^{st} period P61 of the second charging mode, this may cause battery deterioration and shortening of battery life, and when the aerosol generating device 100 operates using an undercharged voltage, such as in the 62^{nd} period P62 of the second charging mode, this may cause inconvenience such as a lack of usage time. To prevent this, the operation of the power management unit 170 included in the aerosol generating device 100 will be described in detail with reference to FIGS. 5 to 7.

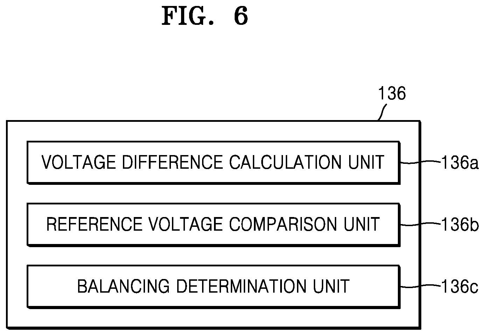

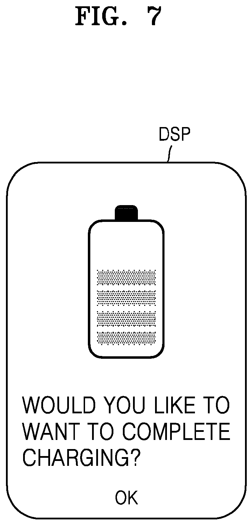

FIG. 5 is a diagram for explaining an operation of a power management unit according to an embodiment. FIG. 6 is a diagram for explaining an operation of an operation mode setting unit according to an embodiment. FIG. 7 is a diagram for explaining a balancing mode according to an embodiment.

Referring to FIGS. 1, 3, 4, and 5, the power management unit 170 may include a battery monitoring unit 172 and a discharge circuit 174.

The battery monitoring unit 172 may measure battery operation data by the control of the main processor 130 and transmit the measured battery operation data to the main processor 130.

The battery monitoring unit 172 may include a transmitter 170a and an analog-to-digital converter (ADC) 172b. At this time, the operation data of the removable battery 110 is a measured value measured to check the state of the battery for management/operation of the battery, and may include voltage, current, temperature, etc. of the removable battery 110.

The transmitter 172a is a component that connects communication for data transmission/reception with the main processor 130. The transmitter 172a may operate at a certain communication speed by the control of the main processor 130.

The ADC 172b is a component that measures the operation data of the removable battery 110 at a certain measurement cycle set by the control of the main processor 130. For example, the ADC 172b may convert a voltage value of the battery charged in a first charging mode to a first digital value, convert a voltage value of the battery charged in a second charging mode to a second digital value, and generate the first digital value and the second digital value as the operation data.

The main processor 130 may obtain the battery operation data measured from the battery monitoring unit 172 and set a battery operation mode based on the obtained operation data.

The main processor 130 may include a receiver 132, a charging mode identification unit 134, and an operation mode setting unit 136.

The receiver 132 is a component that connects communication for data transmission/reception with the battery monitoring unit 172. The receiver 132 may receive the battery operation data transmitted at a certain communication speed from the battery monitoring unit 172.

The charging mode identification unit 134 may identify whether the removable battery 110 mounted on a battery accommodation portion of the aerosol generating device 100 is charged in the first charging mode or the second charging mode based on the first digital value and the second digital value among the received battery operation data.

For example, when the received battery operation data (e.g., the first digital value) is within a preset reference voltage range, the charging mode identification unit 134 may determine that the removable battery 110 mounted on the battery accommodation portion of the aerosol generating device 100 is charged in the first charging mode, and when the received battery operation data (e.g., the second digital value) is outside the preset reference voltage range, the charging mode identification unit 134 may determine that the removable battery 110 mounted on the battery accommodation portion of the aerosol generating device 100 is charged in the second charging mode. At this time, the preset reference voltage range may have a lower limit value (e.g., 4.19 V) and an upper limit value (e.g., 4.21 V) with respect to the first threshold voltage value Vₜₕ₁ (e.g., 4.2 V).

The operation mode setting unit 136 may determine whether balancing of the removable battery 110 is required based on the battery operation data obtained by the receiver 132, and set the battery operation mode according to a result of determination.

In this case, the battery operation mode may include a normal mode and a balancing mode. The normal mode is used when the removable battery 110 charged in the first charging mode is mounted on the battery accommodation portion of the aerosol generating device 100. That is, the normal mode may be activated when no battery balancing situation is required.

The balancing mode is used when a voltage difference obtained by subtracting the voltage value of the battery charged in the second charging mode from the voltage value of the battery charged in the first charging mode is greater than a preset reference voltage difference. When the balancing mode is activated, the operation mode setting unit 136 may perform battery balancing so that the overall balance may be maintained by proposing an individual charging operation to the removable battery 110 having a low charging voltage through a notification, and discharging the amount of charge retained by the removable battery 110 having a high charging voltage.

Referring to FIG. 6, the operation mode setting unit 136 may include a voltage difference calculation unit 136a, a reference voltage comparison unit 136b, and a balancing determination unit 136c.

When it is determined by the charging mode identification unit 134 that the removable battery 110 mounted on the battery accommodation portion of the aerosol generating device 100 is charged in the second charging mode, the voltage difference calculation unit 136a may calculate a voltage difference value obtained by subtracting the voltage value of the removable battery 110 charged in the first charging mode from the voltage value of the removable battery 110 charged in the second charging mode.

The reference voltage comparison unit 136b may compare whether the voltage difference value calculated by the voltage difference calculation unit 136a exceeds a preset reference voltage difference value (e.g., ±0.02 V).

The balancing determination unit 136c may determine whether to perform balancing based on a result of comparison of the reference voltage comparison unit 136b, and determine the battery operation mode according to a result of determination.

As a result of the comparison of the reference voltage comparison unit 136b, when the calculated voltage difference value exceeds the reference voltage difference value, the balancing determination unit 136c may set the battery operation mode to the balancing mode and output a balancing mode setting signal, and when the calculated voltage difference is less than or equal to the reference voltage difference value as a result of the comparison, set the battery operation mode to the normal mode and output a normal mode setting signal.

When the balancing mode setting signal is received from the balancing determination unit 136c, but the reference voltage difference value corresponds to a positive value (e.g., +0.02 V) (i.e., the 61^{st} period P61 of FIG. 4), the discharge circuit 174 may discharge the voltage value of the removable battery 110 to the preset reference voltage value through resistance. At this time, the reference voltage value may correspond to the first threshold voltage value Vₜₕ₁ (e.g., 4.2 V).

On the contrary, referring to FIG. 7, when the balancing mode setting signal is received from the balancing determination unit 136c, but the reference voltage difference value corresponds to a negative value (e.g., -0.02 V) (i.e., the 62^{nd} period P62 of FIG. 4), the main processor 130 may provide a message confirming whether to additionally charge the shortage to a user through a display DSP of the user interface 140.

Hereinafter, the other embodiments will be described. In the following embodiment, the description of the same configuration as that of the embodiment described above will be omitted or simplified, and differences will be mainly described.

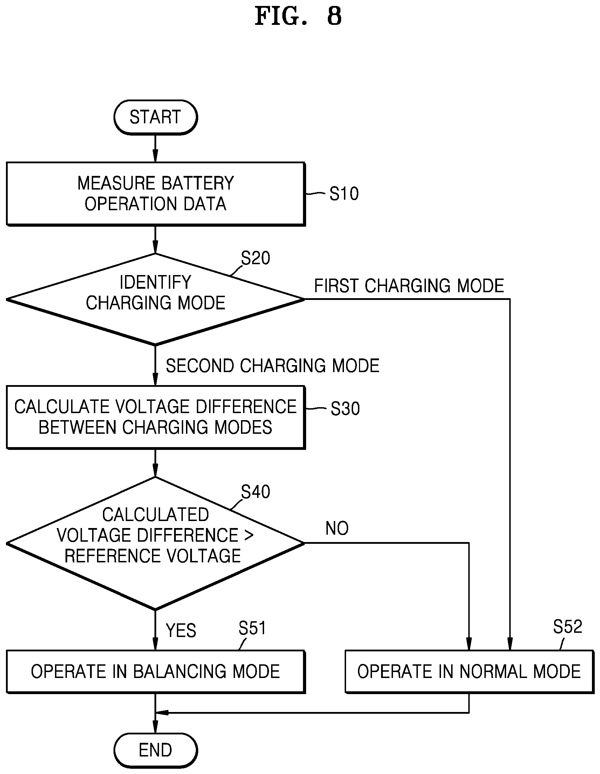

FIG. 8 is a flowchart illustrating an operating method of an aerosol generating device according to an embodiment.

Referring to FIGS. 1 to 8, the operating method the aerosol generating device according to an embodiment may include operation S10 of measuring operation data of the removable battery 110 mounted on a battery accommodation portion of the aerosol generating device 100, and operations S20 to S40 of determining whether to balance the removable battery 110 based on the operation data.

Specifically, in operation S10, the battery monitoring unit 172 may measure battery operation data by the control of the main processor 130 and transmit the measured battery operation data to the main processor 130.

The battery monitoring unit 172 may include the transmitter 170a and the ADC 172b. At this time, the operation data of the removable battery 110 is a measured value measured to check the state of the battery for management/operation of the battery, and may include voltage, current, temperature, etc. of the removable battery 110. The ADC 172b may convert a voltage value of the battery charged in a first charging mode to a first digital value, convert a voltage value of the battery charged in a second charging mode to a second digital value, and generate the first digital value and the second digital value as the operation data.

In operation S20, the main processor 130 may obtain the battery operation data measured from the battery monitoring unit 172 and set a battery operation mode based on the obtained operation data.

The main processor 130 may include the receiver 132, the charging mode identification unit 134, and the operation mode setting unit 136. The charging mode identification unit 134 may identify whether the removable battery 110 mounted on a battery accommodation portion of the aerosol generating device 100 is charged in the first charging mode or the second charging mode based on the first digital value and the second digital value among the received battery operation data.

For example, when the received battery operation data (e.g., the first digital value) is within a preset reference voltage range, the charging mode identification unit 134 may determine that the removable battery 110 mounted on the battery accommodation portion of the aerosol generating device 100 is charged in the first charging mode, and when the received battery operation data (e.g., the second digital value) is outside the preset reference voltage range, the charging mode identification unit 134 may determine that the removable battery 110 mounted on the battery accommodation portion of the aerosol generating device 100 is charged in the second charging mode. At this time, the preset reference voltage range may have a lower limit value (e.g., 4.19 V) and an upper limit value (e.g., 4.21 V) with respect to the first threshold voltage value Vₜₕ₁ (e.g., 4.2 V).

In operation S30, when it is determined by the charging mode identification unit 134 that the removable battery 110 mounted on the battery accommodation portion of the aerosol generating device 100 is charged in the second charging mode, the voltage difference calculation unit 136a may calculate a voltage difference value obtained by subtracting the voltage value of the removable battery 110 charged in the first charging mode from the voltage value of the removable battery 110 charged in the second charging mode.

In operation S40, the reference voltage comparison unit 136b may compare whether the voltage difference value calculated by the voltage difference calculation unit 136a exceeds a preset reference voltage difference value (e.g., ±0.02 V).

In operation S51, as a result of the comparison of the reference voltage comparison unit 136b, when the calculated voltage difference value exceeds the reference voltage difference value, the balancing determination unit 136c may set the battery operation mode to a balancing mode and output a balancing mode setting signal.

When the balancing mode setting signal is received from the balancing determination unit 136c, but the reference voltage difference value corresponds to a positive value (e.g., +0.02 V) (i.e., the 61^{st} period P61 of FIG. 4), the discharge circuit 174 may discharge the voltage value of the removable battery 110 to the preset reference voltage value through resistance. At this time, the reference voltage value may correspond to the first threshold voltage value Vₜₕ₁ (e.g., 4.2 V).

On the contrary, when the balancing mode setting signal is received from the balancing determination unit 136c, but the reference voltage difference value corresponds to a negative value (e.g., -0.02 V) (i.e., the 62^{nd} period P62 of FIG. 4), the main processor 130 may provide a message confirming whether to additionally charge the shortage to a user through the display DSP of the user interface 140.

In operation S52, when the calculated voltage difference is less than or equal to the reference voltage difference value as a result of the comparison, the balancing determination unit 136c may set the battery operation mode to a normal mode and output a normal mode setting signal.

Those of ordinary skill in the art pertaining to the present embodiments can understand that various changes in form and details can be made therein without departing from the scope of the characteristics described above. The disclosed methods should be considered in descriptive sense only and not for purposes of limitation. The scope of the present disclosure is defined by the appended claims rather than by the foregoing description, and all differences within the scope of equivalents thereof should be construed as being included in the present disclosure.

## Claims

1. An aerosol generating device comprising:
a removable battery in a battery accommodation portion;
a battery monitoring unit configured to measure operation data of the battery; and
a control unit comprising an operation mode setting unit configured to determine whether to balance the battery based on the operation data.

2. The aerosol generating device of claim 1, wherein
the operation data includes voltage, current, and temperature of the battery mounted on the battery accommodation portion.

3. The aerosol generating device of claim 1, wherein
a charging mode of the battery includes a first charging mode in which the battery is charged while coupled to the battery accommodation portion, and a second charging mode in which the battery is separated from the battery accommodation portion and charged by an external charger.

4. The aerosol generating device of claim 3, wherein
the battery is charged to a first threshold voltage value in the first charging mode, and is charged to a second threshold voltage value greater than the first threshold voltage value in the second charging mode.

5. The aerosol generating device of claim 4, wherein
the battery monitoring unit includes an analog-to-digital converter configured to convert a voltage value of the battery charged in the first charging mode into a first digital value and convert a voltage value of the battery charged in the second charging mode into a second digital value.

6. The aerosol generating device of claim 5, wherein
the control unit includes
a charging mode identification unit configured to identify whether the battery mounted on the battery accommodation portion is charged in the first charging mode or in the second charging mode based on the first digital value and the second digital value, and
the operation mode setting unit includes
a voltage difference calculation unit configured to, when it is determined by the charging mode identification unit that the battery mounted on the battery accommodation portion is charged in the second charging mode, calculate a voltage difference value obtained by subtracting the voltage value of the battery charged in the first charging mode from the voltage value of the battery charged in the second charging mode;
a reference voltage comparison unit configured to compare whether the voltage difference value calculated by the voltage difference calculation unit has exceeded a preset reference voltage difference value; and
a balancing determination unit configured to determine whether to perform balancing based on a result of comparison of the reference voltage comparison unit and determine a battery operation mode according to a result of the determination.

7. The aerosol generating device of claim 6, wherein
the balancing determination unit is configured to
set the battery operation mode to a balancing mode and output a balancing mode setting signal when the calculated voltage difference value exceeds the reference voltage difference value based on the comparison result, and
set the battery operation mode to a normal mode and output a normal mode setting signal when the calculated voltage difference value is less than or equal to the reference voltage difference value based on the comparison result.

8. The aerosol generating device of claim 7, comprising:
a discharge circuit configured to discharge the voltage value of the battery to a preset reference voltage value through resistance when the balancing mode setting signal is received from the balancing determination unit.

9. The aerosol generating device of claim 8, wherein
the reference voltage value corresponds to the first threshold voltage value.

10. The aerosol generating device of claim 1, further comprising:
a heater configured to receive power from the battery and heat an aerosol generating article.

11. An operating method of an aerosol generating device comprising a heater
configured to receive power from a removable battery and heat an aerosol generating article, the operating method comprising:
measuring operation data of the battery mounted on a battery accommodation portion; and
determining whether to balance the battery based on the operation data.

12. The operating method of claim 11, wherein
a charging mode of the battery includes a first charging mode in which the battery is charged to a first threshold voltage value while coupled to the battery accommodation portion, and a second charging mode in which the battery is separated from the battery accommodation portion and charged to a second threshold voltage value greater than the first threshold voltage value by an external charger.

13. The operating method of claim 12, wherein
the measuring of the operation data further includes converting a voltage value of the battery charged in the first charging mode into a first digital value, and converting a voltage value of the battery charged in the second charging mode into a second digital value.

14. The operating method of claim 13, wherein
the determining of whether to balance the battery includes
identifying whether the battery mounted on the battery accommodation portion is charged in the first charging mode or in the second charging mode based on the first digital value and the second digital value;
when it is determined that the battery mounted on the battery accommodation portion is charged in the second charging mode, calculating a voltage difference value obtained by subtracting the voltage value of the battery charged in the first charging mode from the voltage value of the battery charged in the second charging mode;
comparing whether the voltage difference value exceeds a preset reference voltage difference value; and
determining whether to perform balancing based on a result of the comparison and determining a battery operation mode based on a result of the determination.

15. The operating method of claim 14, wherein
the setting of the battery operation mode includes
setting the battery operation mode to a balancing mode and outputting a balancing mode setting signal when the calculated voltage difference value exceeds the reference voltage difference value based on the result of the comparison, and
setting the battery operation mode to a normal mode and outputting a normal mode setting signal when the calculated voltage difference value is less than or equal to the reference voltage difference value based on the result of the comparison.
